# FASCICULE DE BREVET EUROPEEN

(11) **EP 2 847 061 B1**
(45) Date de publication et mention de la délivrance du brevet: **06.06.2018**
(21) Numéro de dépôt: 13723845.7
(22) Date de dépôt: 22.04.2013
(51) Int. Cl.: B62D 25/16

(54) **DISPOSITIF DE FIXATION RENFORCÉE D'UNE AILE SUR UNE PAROI DE CAISSE**
VERSTÄRKTE BEFESTIGUNGSVORRICHTUNG EINES KOTFLÜGELS AUF EINER KAROSSERIEWAND
DEVICE FOR A REINFORCED FASTENING OF A WING ON A CAR BODY WALL

(30) Priorité: 09.05.2012 FR 1254240
(43) Date de publication de la demande: 18.03.2015
(73) Titulaire: PSA Automobiles SA, 78300 Poissy (FR)
(72) Inventeur: ACQUAVIVA, Jerome, F-91080 Courcouronnes (FR)
(74) Mandataire: Fosse, Danièle
(86) Numéro de dépôt international: PCT/FR2013/050885
(87) Numéro de publication internationale: WO 2013/167821

(56) Documents cités:
- EP-A1- 1 939 075
- EP-A1- 2 011 722
- EP-A1- 2 062 804
- DE-A1-102009 058 127

## Description

La présente invention revendique la priorité de la demande française 1254240 déposée le 9 Mai 2012 dont le contenu (texte, dessins et revendications) est ici incorporé par référence.

L'invention a trait à l'assemblage des véhicules automobiles. Elle concerne plus particulièrement un dispositif de fixation d'une aile sur une paroi de caisse d'un véhicule automobile.

Le montage d'une aile sur une paroi de caisse s'effectue généralement au moyen d'un support interposé entre la paroi et l'aile, qui maintient un écartement entre ces deux éléments. Le support, qui est ordinairement fixé à demeure sur la paroi de caisse, présente une patte en équerre sur laquelle l'aile est montée de manière amovible, par exemple au moyen de vis, de manière, le cas échéant, à permettre un remplacement de l'aile (par exemple en cas d'endommagement consécutif à un choc).

Un tel support, décrit notamment dans la demande de brevet français FR 2 924 085, a fait ses preuves mais demeure perfectible. En effet, il advient, lors du montage de la caisse, que les efforts dus au vissage de l'aile sur le support engendrent une déformation de celui-ci, préjudiciable à la précision du positionnement de l'aile par rapport à la paroi de caisse. Il peut en résulter un défaut d'étanchéité.

Un premier objectif est par conséquent de minimiser les risques d'apparition de défauts d'étanchéité du véhicule.

Un deuxième objectif est d'améliorer la précision de positionnement de l'aile sur la paroi de caisse.

Un troisième objectif est de minimiser les déformations du support lors du montage de l'aile.

Un quatrième objectif est de rigidifier le support fixé sur la paroi de caisse.

A cet effet, il est proposé, en premier lieu, un dispositif de fixation selon la revendication 1.

L'aile latérale offre un point de fixation supplémentaire du support sur la paroi de caisse, qui s'oppose aux déformations induites par le montage de l'aile sur le support. Il en résulte un meilleur positionnement de l'aile par rapport à la paroi de caisse.

Diverses caractéristiques supplémentaires de ce dispositif peuvent être prévues, seules ou en combinaison :
- la platine s'étendant longitudinalement, la patte latérale présente une section supérieure qui s'étend sensiblement transversalement par rapport à la platine ;
- la patte latérale présente une section intermédiaire qui s'étend obliquement à partir de la platine entre celle-ci et la section supérieure ;
- le support présente un embouti de renfort à la jonction entre la section intermédiaire et la platine ;
- le support présente un embouti de renfort à la jonction entre la section supérieure et la section intermédiaire ;
- le support présente un pan incliné entre la platine et la patte inférieure ;
- le support présente des emboutis aux jonctions entre le pan incliné d'une part, la platine et la patte inférieure d'autre part.

Il est proposé, en deuxième lieu, un véhicule automobile comprenant une paroi de caisse ayant une face principale et un rebord sensiblement perpendiculaire à la face principale, une aile et un dispositif de fixation de l'aile sur la paroi de caisse tel que présenté ci-dessus, dont la platine est solidaire de la face principale et la patte latérale solidaire du rebord.

Diverses caractéristiques supplémentaires de ce véhicule peuvent être prévues, seules ou en combinaison :
- le support est fixé sur la paroi de caisse par soudure électrique au niveau de la platine et de la patte latérale ;
- l'aile est fixée sur la patte inférieure du support par vissage.

D'autres objets et avantages de l'invention apparaîtront à la lumière de la description d'un mode préféré de réalisation, faite ci-après en référence aux dessins annexés dans lesquels :
- la figure 1 est une vue de détail en perspective illustrant le montage d'une aile sur une paroi de caisse d'un véhicule automobile, par l'intermédiaire d'un support solidaire de la paroi ;

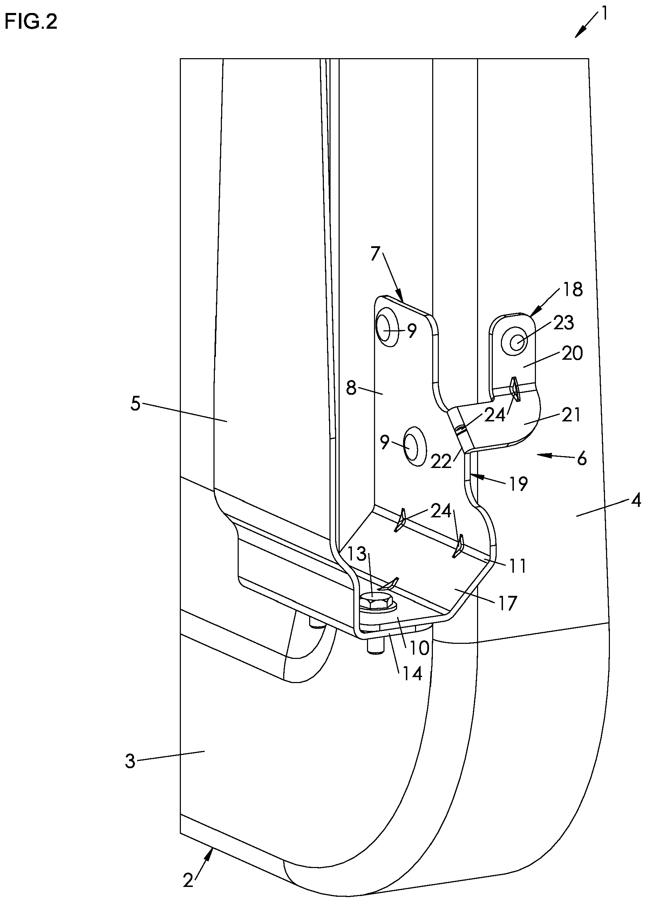

- la figure 2 est une vue similaire à la figure 1, montrant les éléments de la figure 1 une fois l'assemblage effectué. ;

Sur les figures est partiellement représenté un véhicule 1 automobile comprenant une paroi 2 de caisse (par exemple un côté d'habitacle) présentant une face 3 principale et un rebord 4 sensiblement perpendiculaire à la face 3 principale.

On définit par rapport au véhicule 1 un repère orthogonal XYZ comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal,
- un axe Z, définissant une direction verticale, perpendiculaire au plan XY horizontal.

Dans ce repère, la face 3 principale de la paroi 2 de caisse s'étend globalement verticalement dans le plan XZ, tandis que le rebord 4 s'étend globalement verticalement dans le plan YZ.

Le véhicule 1 comprend en outre une aile 5 (qui n'a pas de fonction structurelle mais remplit une double fonction esthétique et aérodynamique du véhicule) - par exemple une aile avant.

Le véhicule 1 comprend en outre un dispositif 6 de fixation de l'aile 5 sur la paroi 2 de caisse, de préférence amovible, pour permettre le remplacement de l'aile 5 en cas d'endommagement.

Ce dispositif 6 comprend un support 7 de fixation de l'aile 5 sur la paroi 2 de caisse, réalisé de préférence par découpe et pliage d'une tôle d'acier.

Comme cela est visible sur les figures, le support 7 est muni d'une platine 8 pour la fixation du support 7 sur la face 3 principale de la paroi 2 de caisse à proximité du rebord 4, de préférence par soudure électrique. Dans l'exemple illustré, la fixation de la platine 8 sur la face 3 principale est réalisée par deux points 9 de soudure électrique alignés sur une diagonale de la platine 8.

Le support 7 est en outre muni d'une patte 10 inférieure qui s'étend en porte-à-faux à l'équerre (dans le plan XY) par rapport à la platine 8, à partir d'un bord 11 inférieur de celle-ci, vers l'extérieur du véhicule 1.

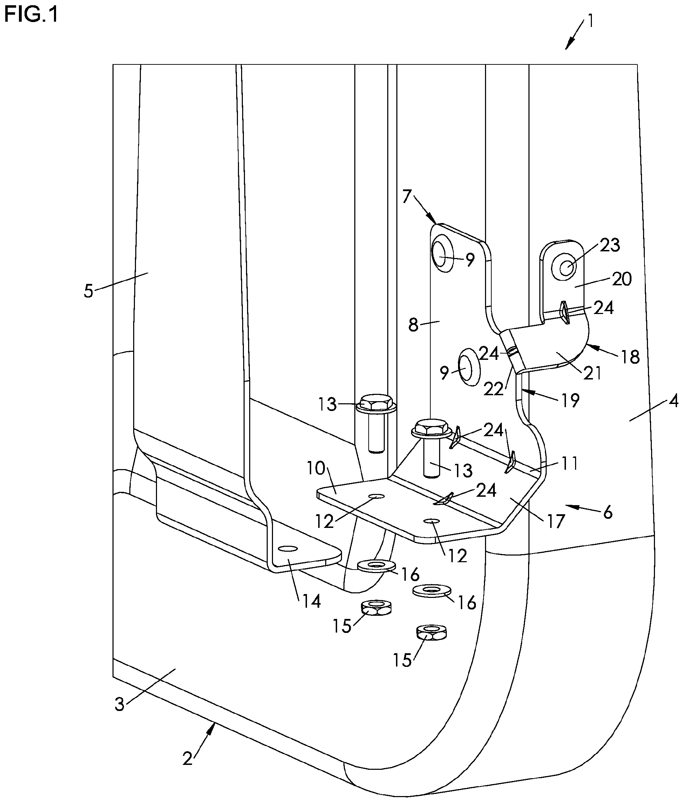

Cette patte 10 inférieure est destinée à supporter l'aile 5. Plus précisément, comme on le voit sur la figure 1, la patte 10 inférieure est percée de trous 12 pour le passage de vis 13 de fixation d'un repli 14 formé à l'équerre sur un bord inférieur de l'aile 5.

Les vis 13, sur lesquels sont serrés des écrous 15 (avec interposition de rondelles 16) assurent la prise en sandwich conjointe de la patte 10 inférieure et du repli 14 de l'aile 5. Cette fixation amovible permet le remplacement, le cas échéant, de l'aile 5.

Selon un mode particulier de réalisation, illustré sur les figures, la patte 10 inférieure ne se raccorde pas directement à la platine 8, mais par l'intermédiaire d'un pan 17 incliné qui s'étend entre elles.

Comme on le voit également sur les figures, le support 7 présente en outre une patte 18 latérale qui s'étend en saillie par rapport à la platine 8 à partir d'un bord 19 latéral de celle-ci, du côté opposé à la patte 10 inférieure (c'est-à-dire vers l'intérieur du véhicule 1).

Cette patte 18 latérale a pour fonction de réaliser une fixation complémentaire du support 7 sur le rebord 4 de la paroi 2 de caisse.

La patte 18 latérale pourrait s'étendre dans son ensemble perpendiculairement par rapport à la platine 8. Cependant, selon un mode de réalisation préféré illustré sur les figures, où la platine 8 présente, sur son bord latéral 19, une échancrure, la patte 18 latérale présente deux sections, à savoir :
- une section 20 supérieure qui s'étend sensiblement transversalement par rapport à la platine 8 (c'est-à-dire dans le plan YZ) ;
- une section 21 intermédiaire qui s'étend obliquement à partir de la platine 8, entre celle-ci et la section 20 supérieure.

Plus précisément, la section 21 intermédiaire s'étend à partir d'un segment 22 oblique du bord 19 latéral, sensiblement au centre de l'échancrure formée par celui-ci. Dans l'exemple représenté, l'angle formé dans le plan XZ par ce segment 22 avec l'axe X est de 45° environ. En d'autres termes, la section 21 intermédiaire s'étend dans un plan parallèle à l'axe Y et formant avec le plan XY un angle de 45° environ.

Cette configuration permet de conférer à la patte 18 latérale une certaine souplesse en flexion lors du montage du support 7, dans la mesure où le rebord 4 ne s'étend pas nécessairement exactement dans le plan YZ, perpendiculairement à la face 3 principale. L'opérateur chargé du montage peut alors, à la main (éventuellement à l'aide d'un outil) régler finement le positionnement de la section 20 supérieure afin que celle-ci épouse au mieux le rebord 4.

La fixation du support 7 au niveau de la patte 18 latérale est de préférence réalisée par soudure électrique. Dans l'exemple illustré, la fixation de la patte 18 latérale au rebord est effectuée par un point 23 unique de soudure électrique.

Ainsi, le support 7 est doublement solidaire de la paroi 2 de caisse : d'une part au niveau de la platine 8, solidaire de la face 3 principale - par soudure électrique dans l'exemple illustré -, d'autre part au niveau de la patte 18 latérale, solidaire du rebord 4 - également par soudure électrique dans l'exemple illustré.

Cette double fixation confère au support 7 une excellente rigidité lors du montage de l'aile 5, en particulier lors du serrage des vis 13. De la sorte, les déformations du support 7 (en particulier en torsion) sont minimales. Il en résulte un positionnement précis de l'aile 5 par rapport à la paroi 2, au bénéfice d'une bonne étanchéité du véhicule 1.

La rigidité du support 7 peut être accrue au moyen de raidisseurs 24 formés par des emboutis aux jonctions :
- entre la section 21 intermédiaire et la platine 8 ;
- entre la section 20 supérieure et la section 21 intermédiaire ;
- entre le pan 17 incliné d'une part, la platine 8 et la patte 10 inférieure d'autre part.

## Revendications

1. Dispositif (**6**) de fixation, sur une paroi (**2**) de caisse d'un véhicule (**1**) automobile, du bord inférieur d'une aile (**5**) du véhicule (**1**), ce dispositif (**6**) comprenant un support embouti (**7**) de fixation de l'aile (**5**) sur la paroi (**2**) de caisse, muni d'une platine (**8**) pour la fixation du support (**7**) sur une face (**3**) principale dans le plan YZ de la paroi (**2**), et d'une patte (**10**) inférieure qui s'étend dans le plan XY en équerre par rapport à la platine (**8**) à partir d'un bord (**11**) inférieur de celle-ci pour la fixation de l'aile (**5**) sur le support (**7**), **caractérisé en ce que** le support (**7**) présente une patte (**18**) latérale qui s'étend en saillie par rapport à la platine (**8**) à partir d'un bord (**19**) latéral de celle-ci du côté opposé à la patte (**10**) inférieure, pour la fixation complémentaire du support (**7**) sur un rebord (**4**) dans le plan YZ de la paroi (**2**) de caisse, sensiblement perpendiculaire à la face (**3**) principale.

2. Dispositif (6) selon la revendication 1, **caractérisé en ce que**, la platine (8) s'étendant longitudinalement, la patte (18) latérale présente une section (20) supérieure qui s'étend sensiblement transversalement par rapport à la platine (8).

3. Dispositif (6) selon la revendication 2, **caractérisé en ce que** la patte (18) latérale présente une section (21) intermédiaire qui s'étend obliquement à partir de la platine (8) entre celle-ci et la section (20) supérieure.

4. Dispositif (6) selon la revendication 3, **caractérisé en ce que** le support (7) présente un embouti (24) de renfort à la jonction entre la section (21) intermédiaire et la platine (8).

5. Dispositif (6) selon la revendication 3 ou la revendication 4, **caractérisé en ce que** le support (7) présente un embouti (24) de renfort à la jonction entre la section (20) supérieure et la section (21) intermédiaire.

6. Dispositif (6) selon l'une des revendications précédentes, **caractérisé en ce que** le support (7) présente un pan (17) incliné entre la platine (8) et la patte (10) inférieure.

7. Dispositif (6) selon la revendication 6, **caractérisé en ce que** le support (7) présente des emboutis (24) aux jonctions entre le pan (17) incliné d'une part, la platine (8) et la patte (10) inférieure d'autre part.

8. Véhicule (1) automobile comprenant une paroi (2) de caisse ayant une face (3) principale et un rebord (4) sensiblement perpendiculaire à la face (3) principale, une aile (5) et un dispositif (6) de fixation de l'aile (5) sur la paroi (2) de caisse selon l'une des revendications précédentes, dont la platine (8) est solidaire de la face (3) principale et la patte (18) latérale solidaire du rebord (4).

9. Véhicule (1) selon la revendication 8, **caractérisé en ce que** le support (7) est fixé sur la paroi (2) de caisse par soudure électrique au niveau de la platine (8) et de la patte (18) latérale.

10. Véhicule (1) selon la revendication 8, **caractérisé en ce que** l'aile (5) est fixée sur la patte (10) inférieure du support (7) par vissage.

## Patentansprüche

1. Vorrichtung (6) zur Fixierung des unteren Randbereichs eines Kotflügels (5) des Fahrzeugs (1) an einer Karosseriewand (2) eines automobilen Fahrzeugs ((1), wobei diese Vorrichtung (6) einen geprägten Träger (7) zum Fixieren des Kotflügels (5) an der Karosseriewand (2) umfasst, ausgestattet mit einer Platte (8) zum Fixieren des Trägers (7) an einer Hauptfläche (3) in der YZ-Ebene der Wand (2) und einer unteren Lasche (10), die sich in der Ebene XY bezogen auf die Platte (8) ausgehend von einem unteren Rand (11) von dieser zur Fixierung des Kotflügels (5) auf dem Träger (7) rechtwinklig erstreckt, **dadurch gekennzeichnet, dass** der Träger (7) eine seitliche Lasche (18) aufweist, die sich bezogen auf die Platte (8) ausgehend von einem seitlichen Rand (19) von dieser, der gegenüberliegenden Seite zu der unteren Lasche (10) vorstehend, zur komplementären Fixierung des Trägers (7) auf einem Rand (4) in der YZ-Ebene der Karosseriewand (2), im Wesentlichen senkrecht zu der Hauptfläche (3), erstreckt.

2. Vorrichtung (6) nach Anspruch 1, **dadurch gekennzeichnet, dass** die Platte (8) sich in Längsrichtung erstreckt, wobei die seitliche Lasche (18) einen oberen Abschnitt (20) aufweist, der sich bezogen auf die Platte (8) im Wesentlichen in Querrichtung erstreckt.

3. Vorrichtung (6) nach Anspruch 2, **dadurch gekennzeichnet, dass** die seitliche Lasche (18) einen zwischenliegenden Abschnitt (21) aufweist, der sich ausgehend von der Platte (8) zwischen dieser und dem oberen Abschnitt (20) schräg erstreckt.

4. Vorrichtung (6) nach Anspruch 3, **dadurch gekennzeichnet, dass** der Träger (7) eine Verstärkungseinstülpung (24) an der Verbindungsstelle zwischen dem zwischenliegenden Abschnitt (21) und der Platte (8) aufweist.

5. Vorrichtung (6) nach Anspruch 3 oder Anspruch 4, **dadurch gekennzeichnet, dass** der Träger (7) eine Verstärkungseinstülpung (24) an der Verbindungsstelle zwischen dem oberen Abschnitt (20) und dem zwischenliegenden Abschnitt (21) aufweist.

6. Vorrichtung (6) nach einem der vorstehenden Ansprüche, **dadurch gekennzeichnet, dass** der Träger (7) ein zwischen der Platte (8) und der unteren Lasche (10) geneigtes Teil (17) aufweist.

7. Vorrichtung (6) nach Anspruch 6, **dadurch gekennzeichnet, dass** der Träger (7) Einstülpungen (24) an den Verbindungsstellen zwischen dem geneigten Teil (17) einerseits, der Platte (8) und der unteren Lasche (10) andererseits aufweist.

8. Automobiles Fahrzeug (1), umfassend eine Karosseriewand (2) mit einer Hauptfläche (3) und einem Rand (4), im Wesentlichen senkrecht zur Hauptfläche (3), einen Kotflügel (5) und eine Vorrichtung (6) zur Fixierung des Kotflügels (5) an der Karosseriewand (2) nach einem der vorstehenden Ansprüche, wobei die Platte (8) mit der Hauptfläche (3) einstückig und die seitliche Lasche (18) mit dem Rand (4) einstückig ist.

9. Fahrzeug (1) nach Anspruch 8, **dadurch gekennzeichnet, dass** der Träger (7) an der Karosseriewand (2) durch Elektroschweißen auf Höhe der Platte (8) und der seitlichen Lasche (18) fixiert ist.

10. Fahrzeug (1) nach Anspruch 8, **dadurch gekennzeichnet, dass** der Kotflügel (5) an der unteren Platte (10) des Trägers (7) durch Verschraubung fixiert ist.

## Claims

1. Device (6) for attaching, to a body wall (2) of a motor vehicle (1), of the lower edge of a fender (5) of the vehicle (1), this device (6) comprising a stamped support (7) for attaching the fender (5) to the body wall (2), provided with a plate (8) for the attaching of the support (7) to a main face (3) in the plane YZ of the wall (2), and of a lower tab (10) which extends in the plane XY at an angle in relation to the plate (8) from an lower edge (11) of the latter for the attaching of the fender (5) to the support (7), **characterised in that** the support (7) has a lateral tab (18) which protrudes with respect to the plate (8) from a lateral edge (19) of the latter on the side opposite the lower tab (10), for the additional attaching of the support (7) on an edge (4) in the plane YZ of the body wall (2), substantially perpendicular to the main face (3).

2. Device (6) according to claim 1, **characterised in that**, the plate (8) extending longitudinally, the lateral tab (18) has an upper section (20) that extends substantially transversely with respect to the plate (8).

3. Device (6) according to claim 2, **characterised in that** the lateral tab (18) has an intermediate section (21) which extends on a slant from the plate (8) between the latter and the upper section (20).

4. Device (6) according to claim 3, **characterised in that** the support (7) has a reinforcing stamp (24) at the junction between the intermediate section (21) and the plate (8).

5. Device (6) according to claim 3 or claim 4, **characterised in that** the support (7) has a reinforcing stamp (24) at the junction between the upper section (20) and the intermediate section (21).

6. Device (6) according to one of the preceding claims, **characterised in that** the support (7) has an inclined facet (17) between the plate (8) and the lower tab (10).

7. Device (6) according to claim 6, **characterised in that** the support (7) has stamps (24) at the junctions between the inclined facet (17) on the one hand, the plate (8) and the lower tab (10) on the other hand.

8. Motor vehicle (1) comprising a body wall (2) having a main face (3) and an edge (4) substantially perpendicular to the main face (3), a fender (5) and a device (6) for attaching the fender (5) to the body wall (2) according to one of the preceding claims, of which the plate (8) is integral with the main face (3) and the lateral tab (18) integral with the edge (4).

9. Vehicle (1) according to claim 8, **characterised in that** the support (7) is attached to the body wall (2) by electric welding on the plate (8) and on the lateral tab (18).

10. Vehicle (1) according to claim 8, **characterised in that** the fender (5) is attached to the lower tab (10) of the support (7) by screwing.
